# FASCICULE DE BREVET EUROPEEN

(11) **EP 3 454 438 B1**
(45) Date de publication et mention de la délivrance du brevet: **29.10.2025**
(21) Numéro de dépôt: 18176924.1
(22) Date de dépôt: 11.06.2018
(51) Int. Cl.: H02B 11/24, H02B 11/02, H02B 11/133

(54) **CASSETTE POUR CELLULE D'APPAREILLAGE ÉLECTRIQUE**
EINSCHUBRAHMEN FÜR EINE SCHALTANLAGE
CRADLE FOR SWITCHGEAR

(30) Priorité: 12.09.2017 FR 1770952
(43) Date de publication de la demande: 13.03.2019
(73) Titulaire: Schneider Electric Industries SAS, 92500 Rueil-Malmaison (FR)
(72) Inventeur: BENTLEY, Jon-Paul, 38410 Vaulnaveys-Le-Haut (FR); MELEY, Jean-Pierre, 38330 Saint Ismier (FR); PULFER, Philippe, 38640 Claix (FR)
(74) Mandataire: Schneider Electric

(56) Documents cités:
- WO-A1-2016/197507
- WO-A1-2017/024330
- CN-A- 103 050 903
- CN-U- 202 134 840
- CN-Y- 201 332 027
- DE-U1- 9 000 374
- JP-U- S5 741 418
- KR-B1- 101 191 571
- US-A1- 2011 216 508
- ABB: "UniGear type ZS1", 30 April 2004 (2004-04-30), XP055322812, Retrieved from the Internet <URL:http://www.elecom.vn/Uploads/files/UnigearZS1.pdf> [retrieved on 20161124]

## Description

### Domaine technique de l'invention

La présente invention concerne un ensemble, également appelé dans la suite du document "cassette" (ou cradle en anglais), qui est destiné à être intégré dans une cellule d'appareillage électrique multiphases. Cet ensemble intègre notamment un chariot mobile portant un appareil électrique interrupteur.

Le terme "appareil électrique interrupteur" utilisé regroupe indifféremment tout appareil du type interrupteur, disjoncteur, contacteur, sectionneur, interrupteur fusible ou recloser. L'invention est particulièrement adaptée pour la conduite et la surveillance des réseaux électriques haute tension, c'est-à-dire d'une tension supérieure à 1000V.

### Etat de la technique

Une cellule d'appareillage électrique haute tension comporte habituellement une structure métallique avec plusieurs compartiments distincts. On peut y trouver un compartiment dit "jeu de barres" placé par exemple à l'arrière de la cellule et où sont regroupées les barres métalliques conductrices du réseau électrique, un compartiment dit "appareillage" qui comporte un appareil interrupteur lequel peut être monté sur un chariot mobile de façon à être débrochable, c'est-à-dire déconnectable du jeu de barres, un compartiment dit "câbles" pour la partie de raccordement de câbles et qui comporte généralement les capteurs pour les mesures de courants/tensions, et un compartiment appelé d'habitude caisson "basse tension" qui comporte le système de protection et de contrôle de l'appareil interrupteur avec notamment un ou plusieurs relais de protection et commande. Le document CN202134840U décrit par exemple une telle cellule. Le document CN 103050903 A décrit une cassette avec disjoncteur débrochable et comprenant un dispositif électrique de verrouillage des volets. Le document WO 2017024330 A1 décrit une cassette avec appareil interrupteur débrochable et mécanisme d'embrochage motorisé commandé par un automate programmable embarqué dans la cassette. Le document JPS 5741418 U décrit une cassette avec un chariot mobile et des volets de protection motorisés.

Il existe un grand nombre d'interactions entre ces différents constituants d'une telle cellule d'appareillage, ce qui entraîne beaucoup de raccordements électriques à effectuer pour des échanges d'informations (commandes, détections, mesures) et également beaucoup d'interverrouillages mécaniques à mettre en place pour des raisons de sécurité. Par ailleurs, de nombreuses personnalisations et options doivent être réalisables en fonction de l'utilisation visée et des besoins recherchés par le client utilisateur de la cellule, ces options devant souvent être intégrées lors de l'assemblage final de la cellule.

Il en résulte que la conception, la formalisation de la commande, l'assemblage, le câblage, ainsi que les tests en usine et sur site d'une telle cellule d'appareillage haute tension sont des opérations complexes qui requièrent souvent un niveau élevé de compétences et de savoir-faire dans les opérations haute tension. De plus, les risques d'erreur au niveau de ces opérations sont importants.

Or, il est de plus en plus souhaitable de simplifier, faciliter et fiabiliser ces opérations de conception, d'assemblage, de câblage, de test et d'installation d'une cellule d'appareillage haute tension. En particulier, on souhaite diminuer le nombre de câbles à raccorder, remplacer un certain nombre de verrouillages mécaniques par des commandes électriques plus simples à mettre en œuvre.

### Exposé de l'invention

Ce but est atteint par une cassette destinée à être intégrée dans une cellule d'appareillage électrique haute tension, la cassette comprenant :
- un chariot mobile portant un appareil interrupteur qui est doté de contacts mobiles, d'un mécanisme de manœuvre des contacts mobiles par l'intermédiaire de ressorts de manœuvre, et d'au moins une bobine de déclenchement des ressorts de manœuvre,
- un volet de protection motorisé destiné à empêcher un accès à des barres conductrices de la cellule d'appareillage,
- des moyens d'entraînement motorisés du chariot mobile destinés à pouvoir connecter l'appareil interrupteur aux barres conductrices.

Selon l'invention, le mécanisme de manœuvre et la bobine de déclenchement sont commandés par un premier équipement d'automatisme embarqué sur le chariot mobile, et les moyens d'entraînement du chariot mobile et le volet de protection sont commandés par un deuxième équipement d'automatisme embarqué dans la cassette. Le premier et le deuxième équipement d'automatisme sont des automates programmables.

Selon une caractéristique, la cassette comporte aussi un sectionneur de mise à la terre qui est commandé par le deuxième équipement d'automatisme.

Selon une autre caractéristique, la cassette comporte une porte d'accès qui est commandée par le deuxième équipement d'automatisme.

Selon une autre caractéristique, le premier équipement d'automatisme et le deuxième équipement d'automatisme sont connectés entre eux par une liaison numérique.

Selon une autre caractéristique, la cassette comporte également un relais de protection électronique qui est connecté à la liaison numérique.

Selon une autre caractéristique, la cassette comporte des capteurs de courant destinés à mesurer des courants circulant dans l'appareil interrupteur et reliés au relais de protection électronique, et comporte des capteurs de tension destinés à mesurer des tensions dans l'appareil interrupteur et reliés au relais de protection électronique.

Selon une autre caractéristique, la cassette comporte également une interface Homme-Machine locale connectée à la liaison numérique.

L'invention porte également sur une cellule d'appareillage haute tension, comprenant des barres conductrices amont et aval, la cellule d'appareillage comportant une telle cassette connectée aux barres conductrices.

Avantageusement, la cassette (ou cradle) décrite dans l'invention est conçue comme un ensemble autonome et homogène gérant un certain nombre de fonctions et elle possède l'ensemble des moyens de commande et de surveillance qui sont nécessaires pour la gestion de ces fonctions. Ce principe permet d'obtenir un ensemble modulaire et autonome dont la conception, la formalisation de la commande, l'assemblage, le câblage, et les tests seront plus faciles, plus fiables et plus rapides à réaliser. Cela permet par exemple :
- De proposer un système complet comprenant toutes les fonctions de la cassette avant l'installation dans la cellule : l'appareil interrupteur, les appareillages avec leur motorisation, le système de contrôle et de protection, les capteurs, les interfaces homme-machine,
- D'intégrer une unité centrale assurant de manière logique et numérique les fonctions de contrôle et d'interverrouillage,
- D'offrir un niveau de personnalisation plus important et plus simple à réaliser à travers le paramétrage de cette unité centrale,
- De simplifier le câblage par l'introduction de liaisons numériques,
- D'effectuer tous les tests sur la cassette juste après son assemblage et donc avant son installation dans la cellule de façon à accélérer la mise en service finale sur site, ces tests pouvant être automatisés selon des séquences programmées,
- De faciliter la maintenance en simplifiant l'accès aux capteurs et actionneurs liés à la cassette,
- De proposer de nouvelles fonctionnalités comme la mise à la terre des barres conductrices par l'intermédiaire de l'appareil interrupteur et d'un sectionneur de mise à la terre, ou comme le désarmement automatique des ressorts de manœuvre avant extraction de l'appareil interrupteur,
- D'autoriser la commande en local ou à distance de la cellule, en agissant sur l'appareil interrupteur de manière individuelle ou en réalisant des enchaînements automatiques de manœuvres de plusieurs appareils interrupteurs.

### Description détaillée

D'autres caractéristiques vont apparaître dans la description détaillée qui suit faite en regard des dessins annexés dans lesquels :

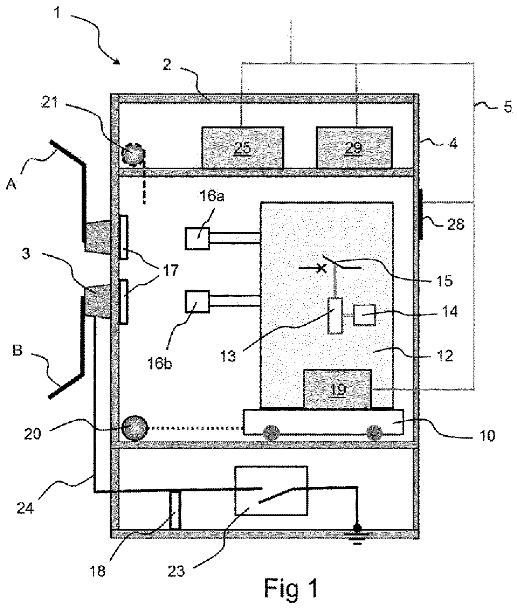

- la figure 1 est un schéma simplifié d'une cassette selon un mode de réalisation de l'invention.

La figure 1 présente la structure générale et les principaux composants d'une cassette 1 conforme à l'invention. Une telle cassette forme un ensemble autonome autour d'un appareil interrupteur et regroupe avantageusement les différentes fonctions de contrôle, commande et surveillance liées à cet appareil interrupteur pour faciliter son intégration dans une cellule d'appareillage électrique.

La cassette 1 comporte une structure ou châssis 2 qui est de préférence métallique. Cette structure métallique comporte notamment des rails de guidage sur lesquels peut se déplacer un chariot mobile 10 (également appelé truck ou trolley en anglais). Le chariot mobile 10 de la cassette 1 porte un appareil interrupteur 12 qui, dans le cadre de l'exemple de la figure 1, est un disjoncteur multipôles, mais l'invention peut aussi s'appliquer à d'autres appareils interrupteurs cités au début du présent document.

Pour les différents pôles, cet appareil interrupteur 12 possède de façon connue des contacts fixes coopérant avec des contacts mobiles 15. L'appareil interrupteur 12 comporte un mécanisme de manœuvre à ressorts 13 possédant des ressorts de manœuvre, à savoir un ressort d'ouverture et un ressort de fermeture, et comporte au moins une bobine de déclenchement 14 des ressorts de manœuvre. Le déclenchement, par la bobine 14, du ressort d'ouverture, respectivement du ressort de fermeture, permet d'actionner l'ouverture, respectivement la fermeture, des contacts mobiles 15 par rapport aux contacts fixes. Pour des raisons de simplification, seul un contact mobile 15 d'un pôle est représenté sur la figure 1.

L'appareil interrupteur peut indifféremment comporter une bobine de déclenchement pour l'ouverture des contacts mobiles et une autre bobine de déclenchement pour la fermeture des contacts mobiles, ou bien peut comporter une seule bobine de déclenchement capable de commander un mouvement dans un sens pour déclencher la fermeture des contacts mobiles et un mouvement dans le sens inverse pour déclencher l'ouverture des contacts mobiles.

De façon classique, le mécanisme de manœuvre 13 comporte également un moteur de réarmement destiné à réarmer les ressorts de manœuvre, de sorte que l'appareil interrupteur 12 ait toujours suffisamment d'énergie pour être capable de réaliser, en cas de défaut sur le réseau électrique, une séquence rapide d'ouverture des contacts mobiles 15, puis de fermeture-ouverture si nécessaire (cycle O-F-O).

Par ailleurs, l'appareil interrupteur 12 est muni de broches de connexion haute tension, respectivement amont 16a et aval 16b, lui permettant de se connecter à un jeu de barres conductrices respectivement amont A et aval B de la cellule d'appareillage. Cette connexion se fait par exemple à l'intérieur de cloches d'embrochage 3 de la cassette 1 pour des problèmes d'isolation diélectrique entre pôles.

La cassette 1 comporte un compartiment appareillage dans lequel se situent le chariot 10 et l'appareil interrupteur 12. Dans ce compartiment appareillage, sont logés aussi des moyens d'entraînement 20 motorisés du chariot mobile 10 qui sont destinés à faire bouger le chariot mobile 10 entre une position embrochée, dans laquelle les broches 16a, 16b sont respectivement connectées aux barres amont A, et aval B de la cellule d'appareillage, et une position débrochée, dans laquelle les broches 16a, 16b sont déconnectées des barres A, B. Les moyens d'entraînement 20 comprennent un moteur d'entraînement qui fait par exemple tourner une vis sans fin liée mécaniquement au chariot 10. Les moyens d'entraînement 20 comprennent également les éléments suivants, non représentés sur la figure 1 : des moyens d'accrochage permettant de d'entraîner l'appareil interrupteur 12 de la position débrochée vers la position embrochée, par exemple à l'aide d'un doigt d'accrochage coopérant avec un dispositif d'encliquetage, et des moyens permettant une connexion automatique entre la cassette 1 et l'appareil interrupteur 12 pour faire circuler les signaux basse tension entre la cassette 1 et l'appareil interrupteur 12.

Optionnellement, le compartiment appareillage de la cassette 1 loge également des capteurs de courant 17, de préférence bas niveau de type LPCT (Low Power Current Tranformer), placés face aux cloches d'embrochage 3 et traversant les broches de connexion 16a et 16b, pour mesurer le courant circulant en amont et en aval de l'appareil interrupteur 12 lorsque celui-ci est en position embrochée. De même, des capteurs de tension 18, de préférence bas niveau de type LPVT (Low Power Voltage Tranformer), peuvent aussi être installés dans la cassette 1, par exemple pour mesurer une tension entre l'appareil interrupteur 12 et la terre.

La cassette 1 comporte également un volet de protection 21 (ou shutter) qui est motorisé. Ce volet est replié dans une position dite haute pour permettre aux broches de connexion 16a, 16b de l'appareil interrupteur 12 d'avoir accès aux barres conductrices haute tension A, B de la cellule d'appareillage, ou déplié dans une position dite basse pour interdire un accès aux barres conductrices A, B lorsque l'appareil interrupteur est débroché, de façon à assurer la sécurité d'un opérateur en l'isolant des barres A, B qui sont potentiellement sous haute tension. Le volet 12 peut être guidé durant son mouvement par des rails de guidage liés à la structure métallique 2 de la cassette 1.

Optionnellement, la cassette 1 dispose également d'une fonction de mise à la terre, qui est logée habituellement en partie basse de la cassette 1. Cette fonction est réalisée à l'aide d'un sectionneur 23 de mise à la terre, qui est connecté d'un côté à un point de la structure métallique 2 relié à la terre, et de l'autre côté à la barre conductrice aval B par l'intermédiaire d'un conducteur 24.

Selon l'invention, la cassette 1 comporte un premier équipement d'automatisme 19 et un deuxième équipement d'automatisme 29. Le premier équipement d'automatisme 19 et le deuxième équipement d'automatisme 29 sont des automates programmables de type PLC (Programmable Logic Controller). Is sont raccordés aux différents capteurs/actionneurs par des liaisons filaires ou sans fil (wireless).

De plus, ils sont connectés entre eux par une liaison numérique 5, basée par exemple sur un réseau de communication de type Ethernet et/ou sans fil (wireless), leur permettant d'échanger des données/informations en temps réel. Préférentiellement, cette liaison numérique 5 permet aussi de faire communiquer les équipements d'automatisme 19, 29 avec un système de pilotage et de supervision à distance, de type SCADA (Supervisory Control And Data Acquisition) ou autres. De plus, pour dialoguer avec un opérateur local, la cassette 1 peut comporter une interface Homme-Machine locale 28, par exemple de type écran/clavier placé sur la face avant 4 de la cassette 1 ou à distance (smartphone, tablette), cette interface Homme-Machine 28 étant elle aussi connectée à la liaison numérique 5.

Le premier équipement d'automatisme 19 est directement embarqué sur le chariot mobile 10 et est plus particulièrement en charge de contrôler et commander les éléments qui sont liés à l'appareil interrupteur 12, notamment le mécanisme de manœuvre 13 et la ou les bobines de déclenchement 14. Le premier équipement d'automatisme 19 gère également la commande d'éventuels relais auxiliaires liés à l'appareil interrupteur à partir de l'information de position des contacts mobiles 15 ou de capteurs auxiliaires.

Pour cela, le premier équipement d'automatisme 19 peut recevoir en entrée des informations provenant de différents capteurs qui sont également intégrés dans la cassette 1, comme les courants circulant dans la bobine de déclenchement et dans le moteur de réarmement des ressorts de manœuvre, la position des ressorts de manœuvre, la position des contacts mobiles 15, des informations sur l'état de l'appareil interrupteur 12 (perte de vide, température, soudure contacts), la position du chariot mobile, etc...

Le deuxième équipement d'automatisme 29 est plus particulièrement en charge de contrôler et commander les autres éléments liés à la cassette 1, notamment le moteur du volet de protection 21 et le moteur des moyens d'entraînement 20 du chariot mobile. Le deuxième équipement d'automatisme 29 contrôle et commande également le sectionneur de mise à la terre 23. Il gère également l'interface Homme-Machine locale 28 quand elle existe, ainsi que les commandes de verrouillage des accès à l'intérieur de la cassette, comme par exemple la commande d'une porte d'accès de la cassette 1 permettant d'accéder à l'appareil interrupteur 12. Cette porte d'accès (non représentée sur la figure 1) est située sur la face avant 4 de la cassette 1 et est commandée par une serrure électrique pilotée par le deuxième équipement d'automatisme 29.

Pour cela, le deuxième équipement d'automatisme 29 peut recevoir en entrée des informations provenant de différents capteurs qui sont également intégrés dans la cassette 1, comme les courants circulant dans le moteur du volet 21 et dans le moteur d'entraînement 20, la position du chariot mobile 10, la position du volet 21, la position des contacts du sectionneur 23, des informations sur des verrouillages de sécurité (accès compartiments et face avant de la cassette) et sur l'environnement de la cassette (température, humidité,...), la position (ouverte ou fermée) de la porte d'accès en face avant de la cassette 1, etc...

De plus, un relais de protection électronique 25, distinct du deuxième équipement d'automatisme 29, est embarqué dans la cassette 1. Il est connecté au premier équipement d'automatisme 19 et au deuxième équipement d'automatisme 29 par la liaison numérique 5 afin de pouvoir échanger des données/informations. Le relais de protection électronique 25, qui peut être également tout type d'IED ou de PLC, est principalement en charge de surveiller l'état du réseau électrique circulant dans l'appareil interrupteur 12 pour protéger la charge connectée à la cellule d'appareillage et d'envoyer des ordres d'ouverture et fermeture des contacts mobiles 15 de l'appareil interrupteur 12. Même si ces fonctions pourraient être intégrées dans le premier ou le deuxième équipement d'automatisme, on préfère généralement, pour des raisons de sécurité et de disponibilité, les dissocier dans un équipement spécifique propre 25 en charge de surveiller les défauts et anomalies sur le réseau électrique.

Le relais de protection électronique 25 reçoit en entrée des informations provenant notamment des capteurs de courant bas niveau LPCT 17, des capteurs de tension bas niveau LPVT 18, ainsi que la position des contacts mobiles de l'appareil interrupteur 12 (ouvert, fermé). Ces informations peuvent ensuite être transmises au deuxième équipement d'automatisme 29 via la liaison numérique 5.

Ainsi, l'architecture digitale de la cassette 1 forme un ensemble intégré et autonome qui permet de gérer de façon électrique et numérique l'ensemble des commandes avec leurs interverrouillages électriques associés, alors qu'auparavant ces interverrouillages comprenaient souvent des composantes mécaniques plus compliquées à mettre en œuvre et plus contraignantes en termes de fonctionnalités.

En particulier, l'interverrouillage mécanique entre l'autorisation de fermeture du sectionneur de mise à la terre 23 et la position débrochée de l'appareil interrupteur 12 n'existe plus. C'est le deuxième équipement d'automatisme 29, en charge de piloter le sectionneur 23, qui contrôle les conditions requises permettant d'autoriser la fermeture/ouverture du sectionneur 23. Cela permet de réaliser aisément la fonctionnalité qui consiste à pouvoir raccorder les jeux de barres conductrices amont A et aval B à la terre, en évitant avantageusement l'ajout d'une cellule spécifique ou l'utilisation d'un shunt de mise à la terre. Pour cela, le deuxième équipement d'automatisme 29 vérifie que l'appareil interrupteur 12 est en position embrochée et à l'état passant (càd contacts mobiles fermés 15), puis vérifie l'absence de tension circulant dans l'appareil interrupteur 12 (grâce aux capteurs 18). Il peut alors sur demande d'un opérateur fermer le sectionneur 23 en toute sécurité, ce qui donne un moyen simple de mettre les barres conductrices A et B à la terre, ce qui est utile pour faire une maintenance du jeu de barres.

De même, lorsqu'un opérateur veut extraire l'appareil interrupteur 12 et le sortir de la cassette 1, le premier équipement d'automatisme 19 est capable de réaliser aisément une fonctionnalité qui consiste à effectuer automatiquement la décharge des ressorts de manœuvre pour éviter tout risque lié à la présence d'un ressort armé à proximité de l'opérateur. Cette fonctionnalité est désormais faite électriquement et ne nécessite plus de dispositif mécanique complexe. Pour cela, quand l'appareil interrupteur 12 est en position débrochée et avant d'autoriser l'ouverture de la porte d'accès de la cassette 1, le premier équipement d'automatisme 19 effectue automatiquement une opération de fermeture puis d'ouverture des contacts mobiles 15 de l'appareil interrupteur 12 sans réactiver ensuite le moteur de réarmement du mécanisme de manœuvre 13. Ainsi, sans nécessiter de dispositif mécanique, les ressorts de manœuvre ne sont pas armés lorsque l'opérateur extrait l'appareil interrupteur 12, ce qui réduira les risques lors des manipulations de l'opérateur.

## Revendications

1. Cassette destinée à être intégrée dans une cellule d'appareillage électrique haute tension, la cassette (1) comprenant :
- un chariot mobile (10) portant un appareil interrupteur (12) qui est doté de contacts mobiles (15), d'un mécanisme de manœuvre (13) des contacts mobiles par l'intermédiaire de ressorts de manœuvre, et d'au moins une bobine de déclenchement (14) des ressorts de manœuvre,
- un volet de protection (21) motorisé destiné à empêcher un accès à des barres conductrices (A, B) de la cellule d'appareillage,
- des moyens d'entraînement (20) motorisés du chariot mobile (10) destinés à pouvoir connecter l'appareil interrupteur (12) aux barres conductrices (A, B),
- le mécanisme de manoeuvre (13) et la bobine de déclenchement (14) sont commandés par un premier équipement d'automatisme (19) embarqué sur le chariot mobile (10),
- les moyens d'entraînement (20) du chariot mobile (10) et le volet de protection (21) sont commandés par un deuxième équipement d'automatisme (29) embarqué dans la cassette (1), et
- le premier équipement d'automatisme (19) et le deuxième équipement d'automatisme (29) sont des automates programmables.

2. Cassette selon la revendication 1, **caractérisé en ce qu'**elle comporte aussi un sectionneur de mise à la terre (23) qui est commandé par le deuxième équipement d'automatisme (29).

3. Cassette selon la revendication 1, **caractérisé en ce qu'**elle comporte une porte d'accès qui est commandée par le deuxième équipement d'automatisme (29).

4. Cassette selon la revendication 1, **caractérisé en ce que** le premier équipement d'automatisme (19) et le deuxième équipement d'automatisme (29) sont connectés entre eux par une liaison numérique (5).

5. Cassette selon la revendication 4, **caractérisé en ce qu'**un relais de protection électronique (25) est également embarqué dans la cassette (1), le relais de protection électronique (25) étant connecté à la liaison numérique (5).

6. Cassette selon la revendication 5, **caractérisé en ce qu'**elle comporte des capteurs de courant (17) destinés à mesurer des courants circulant dans l'appareil interrupteur (12) et reliés au relais de protection électronique (25).

7. Cassette selon la revendication 5, **caractérisé en ce qu'**elle comporte des capteurs de tension (18) destinés à mesurer des tensions dans l'appareil interrupteur (12) et reliés au relais de protection électronique (25).

8. Cassette selon la revendication 4, **caractérisé en ce qu'**elle comporte également une interface Homme-Machine locale (28) connectée à la liaison numérique (5).

9. Cellule d'appareillage haute tension, comprenant des barres conductrices amont et aval (A, B), caractérisée en qu'elle comporte une cassette (1) selon l'une des revendications précédentes connectée aux barres conductrices (A, B).

## Patentansprüche

1. Einschubrahmen, der dazu bestimmt ist, in eine elektrische Hochspannungsschaltanlage integriert zu werden, wobei der Einschubrahmen (1) umfasst:
- einen mobilen Schlitten (10), der ein Schaltgerät (12) trägt, das mit mobilen Kontakten (15), einem Betätigungsmechanismus (13) zur Betätigung der mobilen Kontakte über Betätigungsfedern und mindestens einer Auslösespule (14) für die Betätigungsfedern ausgestattet ist,
- einen motorisierten Schutzrollladen (21), der dazu bestimmt ist, einen Zugang zu Stromschienen (A, B) der Schaltanlage zu verhindern,
- motorisierte Antriebsmittel (20) für den mobilen Schlitten (10), die dazu bestimmt sind, das Schaltgerät (12) an die Stromschienen (A, B) anschließen zu können,
- der Betätigungsmechanismus (13) und die Auslösespule (14) werden durch eine erste Automatisierungseinrichtung (19) gesteuert, die auf dem mobilen Schlitten (10) angeordnet ist,
- die Antriebsmittel (20) des mobilen Schlittens (10) und der Schutzrollladen (21) werden durch eine zweite Automatisierungseinrichtung (29) gesteuert, die in dem Einschubrahmen (1) angeordnet ist, und
- die erste Automatisierungseinrichtung (19) und die zweite Automatisierungseinrichtung (29) sind programmierbare Steuerungen.

2. Einschubrahmen nach Anspruch 1, **dadurch gekennzeichnet, dass** er auch einen Erdungstrennschalter (23) aufweist, der durch die zweite Automatisierungseinrichtung (29) gesteuert wird.

3. Einschubrahmen nach Anspruch 1, **dadurch gekennzeichnet, dass** er eine Zugangstür aufweist, die durch die zweite Automatisierungseinrichtung (29) gesteuert wird.

4. Einschubrahmen nach Anspruch 1, **dadurch gekennzeichnet, dass** die erste Automatisierungseinrichtung (19) und die zweite Automatisierungseinrichtung (29) über eine digitale Verbindung (5) aneinander angeschlossen sind.

5. Einschubrahmen nach Anspruch 4, **dadurch gekennzeichnet, dass** ein elektronisches Schutzrelais (25) ebenfalls in dem Einschubrahmen (1) angeordnet ist, wobei das elektronische Schutzrelais (25) an die digitale Verbindung (5) angeschlossen ist.

6. Einschubrahmen nach Anspruch 5, **dadurch gekennzeichnet, dass** er Stromsensoren (17) aufweist, die dazu bestimmt sind, in dem Schaltgerät (12) fließende Ströme zu messen, und mit dem elektronischen Schutzrelais (25) verbunden sind.

7. Einschubrahmen nach Anspruch 5, **dadurch gekennzeichnet, dass** er Spannungssensoren (18) aufweist, die dazu bestimmt sind, Spannungen in dem Schaltgerät (12) zu messen, und mit dem elektronischen Schutzrelais (25) verbunden sind.

8. Einschubrahmen nach Anspruch 4, **dadurch gekennzeichnet, dass** er auch eine lokale Mensch-Maschine-Schnittstelle (28) aufweist, die an die digitale Verbindung (5) angeschlossen ist.

9. Hochspannungsschaltanlage, die vorgelagerte und nachgelagerte Stromschienen (A, B) umfasst, **dadurch gekennzeichnet, dass** sie einen Einschubrahmen (1) nach einem der vorhergehenden Ansprüche aufweist, der an die Stromschienen (A, B) angeschlossen ist.

## Claims

1. Cradle intended to be incorporated in a high-voltage electrical switchgear cubicle, the cradle (1) comprising:
- a mobile trolley (10) bearing a switch apparatus (12) which is provided with mobile contacts (15), a mechanism (13) for operating the mobile contacts via operating springs, and at least one coil (14) for actuating the operating springs,
- a motorized protection shutter (21) intended to prevent access to conductive busbars (A, B) of the switchgear cubicle,
- motorized means (20) for driving the mobile trolley (10) intended to be able to connect the switch apparatus (12) to the conductive busbars (A, B),
- the operating mechanism (13) and the actuating coil (14) are controlled by a first automation controller (19) embedded on the mobile trolley (10),
- the means (20) for driving the mobile trolley (10) and the protection shutter (21) are controlled by a second automation controller (29) embedded in the cradle (1).
- the first automation controller (19) and the second automation controller (29) are programmable logic controllers.

2. Cradle according to Claim 1, **characterized in that** it also comprises an earthing disconnector (23) which is controlled by the second automation controller (29).

3. Cradle according to Claim 1, **characterized in that** it comprises an access door which is controlled by the second automation controller (29).

4. Cradle according to Claim 1, **characterized in that** the first automation controller (19) and the second automation controller (29) are connected to one another by a digital link (5).

5. Cradle according to Claim 4, **characterized in that** an electronic protection relay (25) is also embedded in the cradle (1), the electronic protection relay (25) being connected to the digital link (5).

6. Cradle according to Claim 5, **characterized in that** it comprises current sensors (17) intended to measure currents circulating in the switch apparatus (12) and linked to the electronic protection relay (25).

7. Cradle according to Claim 5, **characterized in that** it comprises voltage sensors (18) intended to measure voltages in the switch apparatus (12) and linked to the electronic protection relay (25).

8. Cradle according to Claim 4, **characterized in that** it also comprises a local human-machine interface (28) connected to the digital link (5).

9. High-voltage switchgear cubicle, comprising upstream and downstream conductive busbars (A, B), **characterized in that** it comprises a cradle (1) according to one of the preceding claims connected to the conductive busbars (A, B).
